# NEUE EUROPÄISCHE PATENTSCHRIFT

(11) **EP 2 114 630 B2**
(45) Veröffentlichungstag und Bekanntmachung des Hinweises auf die Entscheidung über den Einspruch: **26.02.2020**
(45) Hinweis auf die Patenterteilung: 26.10.2011
(21) Anmeldenummer: 08707735.0
(22) Anmeldetag: 15.02.2008
(51) Int. Cl.: B25J 9/16, G05B 19/4061

(54) **SENSORVORRICHTUNG SOWIE ANLAGE MIT EINEM FÖRDERER UND EINER SENSORVORRICHTUNG**
SENSOR DEVICE AND SYSTEM HAVING A CONVEYOR AND A SENSOR DEVICE
DISPOSITIF DÉTECTEUR, ET INSTALLATION ÉQUIPÉE D'UN CONVOYEUR ET D'UN DISPOSITIF DÉTECTEUR

(30) Priorität: 06.03.2007 DE 102007011221; 16.03.2007 DE 102007013299
(43) Veröffentlichungstag der Anmeldung: 11.11.2009
(73) Patentinhaber: Rockwell Automation Safety AG, 7302 Landquart (CH)
(72) Erfinder: STEIN, Manfred, Norbert, CH-7013 Domat (CH); MEINHERZ, Carl, CH-7208 Malans (CH); ALBERS, Bas, CH-7000 Chur (CH)
(74) Vertreter: Grünecker Patent- und Rechtsanwälte PartG mbB
(86) Internationale Anmeldenummer: PCT/EP2008/001166
(87) Internationale Veröffentlichungsnummer: WO 2008/107067

(56) Entgegenhaltungen:
- EP-A- 1 544 535
- EP-A- 1 662 349
- EP-A1- 1 353 196
- EP-A1- 1 586 805
- EP-A1- 1 635 108
- DE-A1- 4 411 448
- DE-A1- 10 152 543
- DE-A1- 10 216 023
- DE-A1- 10 320 343
- DE-A1- 19 752 145
- DE-A1- 19 833 207
- DE-A1-102004 041 821
- DE-A1-102005 003 794
- DE-A1-102005 030 829
- DE-A1-102005 049 159

## Beschreibung

### Stand der Technik

Industrielle Produktionseinrichtungen umfassen häufig Roboter oder Maschinen, die über einen Förderer automatisch mit dem zu verarbeitenden Gut versorgt werden. Derartige Roboter oder Maschinen stellen regelmäßig einen Gefahrenbereich dar, der mit Sicherheitseinrichtungen zu überwachen ist. Dabei ist es gewöhnlich erforderlich, dass die Sicherheitseinrichtung in der Lage ist, den Materialzufluss zum Roboter oder zur Maschine von Personen zu unterscheiden, deren Annäherung an den Roboter oder die Maschine nicht erlaubt ist.

Im Stand der Technik gibt es viele Lösungen, wo Referenzobjekte und Referenzszenen gespeichert werden und während des Betriebs jeder Unterschied einer aktuellen Szene zur Referenz festgestellt werden kann. Einige Lösungen speichern Referenzobjekte, deren Annäherung an einen gefährlichen Bereich erlaubt ist. Andere hingegen speichern die Referenzobjekte oder Szenen, die zu einer gefährlichen Situation führen können und dementsprechend eine bestimmte Reaktion der Maschine oder des Roboters erfordern.

Aus der deutschen Offenlegungsschrift DE 44 11 448 A1 ist eine dreidimensionale Messeinrichtung bekannt, mit welcher eine Konturfunktion eines Objektes erfasst und mit einer gespeicherten Referenzkontur verglichen werden kann. Abhängig davon, wie die gemessene Kontur zu einer gespeicherten Kontur passt oder nicht passt, kann eine vorgegebene Reaktion des Systems eingeleitet werden.

Die DE 10152543 A1 befasst sich mit einem Verfahren und einer Vorrichtung zum Steuern wenigstens einer sicherheitsrelevanten Funktion, z.B. einen Notstopp, einer Maschine. Ein Überwachungsbereich wird von wenigstens einem orts- und zeitauflösenden Sensor überwacht, mit dem die Position, die Bewegungsrichtung und/oder die Bewegungsgeschwindigkeit einer Person erkannt wird. Eine Sicherheitsgrenze oder ein Sicherheitsbereich begrenzt einen Gefahrenbereich und definiert einen Sicherheitsabstand zur Maschine. Bei Eindringen in den Gefahrenbereich wird die sicherheitsrelevante Funktion ausgelöst. Die Lage der Sicherheitsgrenze und/oder die Ausdehnung des Sicherheitsbereichs wird in Abhängigkeit von der Position, der Bewegungsrichtung und/oder der Bewegungsgeschwindigkeit situationsbedingt variabel ausgelegt.

Die EP 1544535 A1 betrifft eine Vorrichtung zur Überwachung eines Erfassungsbereichs an einem Arbeitsmittel mit einer Lichtstrahlen emittierenden Beleuchtungseinheit zur Beleuchtung des Erfassungsbereichs und mit einer Kamera zur Ermittlung dreidimensionaler Bilder des Erfassungsbereichs. Die Kamera weist eine matrixförmige Anordnung von Empfangselemente auf, deren Ausgangssignale in einer Auswerteeinheit ausgewertet werden, wobei für jedes Empfangselement ein Distanzwert aus der Lichtlaufzeit, der von der Beschleunigungseinheit emittierten und aus dem Erfassungsbereichs zurück reflektierten Lichtstrahlen ermittelt wird. Mit der Auswerteeinheit wird wenigstens ein auf das Arbeitsmittel geführter Schaltausgang angesteuert, so dass das Arbeitsmittel nur dann in Betrieb gesetzt ist, falls sich kein Objekt im Erfassungsbereich befindet.

Die Druckschrift DE 102005003794 A1 befasst sich mit einer Vorrichtung zur Absicherung eines angetriebenen Bewegungselementes gegen ungewollte Kollisionen mit einem auf einen vorbestimmten Bewegungsweg in Bewegungsrichtung des Bewegungselements liegenden Objekts. Die Vorrichtung umfasst eine Lichtschrankenanordnung mit mehreren nacheinander angeordneten Lichtschranken sowie eine Elektronikeinheit, mit welcher die Bewegung des Bewegungselements in Abhängigkeit von einem detektierten Objekt in einem Sicherheitsmodus stoppbar und/oder reversierbar ist. Aus einer Erfassung der Zeit zwischen zwei Lichtschranken unter Hinzunahme der Distanz zwischen den Lichtschranken ist die Elektronikeinheit in der Lage, die Geschwindigkeit des Bewegungselements zu bestimmen.

Die Feststellung einer Kontur und der Abgleich mit einer Referenzkontur kann nie vollständig durchgeführt werden, da zu jedem neuen Objekt eine Referenzkontur in einem Einlernprozess erfasst werden muss.

### Aufgabe und Vorteile der Erfindung

Der Erfindung liegt die Aufgabe zugrunde, die Überwachung von vorgegebenen, insbesondere gefährlichen Bereichen im Hinblick auf z.B. Menschen vergleichsweise einfacher zu gestalten.

Diese Aufgabe wird durch die Merkmale des Anspruchs 1 sowie 10 gelöst.

In den abhängigen Ansprüchen sind vorteilhafte und zweckmäßige Weiterbildungen der Erfindung angegeben.

Die Erfindung geht zunächst von einer Sensorvorrichtung mit einer Sensoranordnung zur Detektion von sich bewegenden Objekten aus, die Sensormittel und eine Elektronikeinheit umfasst. Der Kern der Erfindung liegt darin, dass die Sensoranordnung derart ausgestaltet ist, dass mittels der Sensoranordnung (1,1',1") das sich bewegende Objekt erfasst und daraufhin untersucht wird, ob die Oberfläche des sich bewegenden Objekts Bereiche aufweist, die sich mit unterschiedlicher Geschwindigkeit bewegen.

Dieser Vorgehensweise liegt die Erkenntnis zugrunde, dass Gegenstände und Lebewesen, insbesondere Menschen charakteristische Bewegungsmuster aufweisen. Gegenstände bewegen sich normalerweise in Bezug auf ihre Oberfläche mit einer homogenen Geschwindigkeit oder Beschleunigung, unabhängig davon, ob sie mit einem Förderer transportiert werden oder sich automatisch bewegen. Personen hingegen können sich nicht bewegen, ohne dass Oberflächenbereiche der Person unterschiedliche Geschwindigkeiten und Beschleunigungen aufweisen. Z.B. bewegt sich ein Bein einer - Person, wogegen das andere auf einem Untergrund steht. Diese Differenz von Geschwindigkeiten oder Beschleunigungen der Objektoberfläche kann bestimmt und dazu genutzt werden, einen Gegenstand von einer Person bzw. einem Tier vergleichsweise einfach zu unterscheiden. Andererseits kann bereits die Detektion einer Beschleunigung des Objekts ausreichen, um eine solche Detektion einer Person zuzuordnen. Denn auf einem Förderer transportierte Objekte beschleunigen bei der Annäherung normalerweise nicht. Sobald eine Beschleunigung, z.B. durch einen zeitlichen Vergleich von Bildern des Objekts erkannt wird, kann ein Signal ausgegeben werden. Die genannten Möglichkeiten lassen sich auch kombinieren, um eine Objektdifferenzierung vornehmen zu können.

Die Sensoranordnung ist dazu ausgebildet, ein Bild des Objekts mit Distanzen zur Objektoberfläche, d.h. eine "Distanzkarte" zu ermitteln. Werden mehrere derartige Bilder nacheinander erfasst, lässt sich aus der Differenz der Bilder, d.h. der Distanzen, eine Geschwindigkeit oder Beschleunigung ermitteln, in dem die Einzeldifferenzen zur ablaufenden Zeit in Bezug gesetzt werden. Daraus kann dann eine Geschwindigkeitskarte oder Beschleunigungskarte der betreffenden Objektoberfläche bestimmt werden. Aus diesen Daten lassen sich leicht Bereiche am Objekt bestimmen, die im Vergleich zu anderen Bereichen des Objekts eine andere Geschwindigkeit oder Beschleunigung aufweisen. Übersteigt der Geschwindigkeitsoder Beschleunigungsunterschied ein vorgegebenes Maß kann auf die Bewegung eines Lebewesens, insbesondere eines Menschen geschlossen werden.

Zur Bestimmung eines Geschwindigkeitsbildes bzw. Beschleunigungsbildes wird vorzugsweise eine vorgegebene Anzahl von Distanzbildern, die zeitlich nacheinander aufgenommen werden, derart herangezogen, dass ein neues Bild immer das älteste Bild der vorgegebenen Gruppe ersetzt, um daraus die Geschwindigkeit oder die Beschleunigung von insbesondere Einzelbildpunkten zu bestimmen. Damit wird in einer fortschreitenden Iteration eine aktuelle Geschwindigkeit oder Beschleunigung ermittelt.

Beispielsweise werden drei Bilder 1, 2 und 3 zur Berechnung der Geschwindigkeit verwendet. Für den nächsten Schritt wird ein viertes Bild herangezogen, aber das erste Bild für die erneute Berechnung der Geschwindigkeiten nicht mehr berücksichtigt, sondern dann die Bilder 2, 3 und 4.

Bei der Erfindung ist die Sensoranordnung zur Ausgabe eines Signals, insbesondere Alarmsignals bei der Erfassung von verschiedenen Geschwindigkeiten und/oder Beschleunigungen für unterschiedliche Bereiche innerhalb einer Oberfläche eines Objekts ausgebildet, wenn sich die Geschwindigkeiten oder Beschleunigungen um ein vordefiniertes Maß unterscheiden. Als weiteres Kriterium kann die Größe des Bereichs mit unterschiedlicher Geschwindigkeit oder Beschleunigung in Bezug auf die für die Sensormittel sichtbare Objektoberfläche gesetzt werden. Beispielsweise muss ein Bereich, der eine andere Geschwindigkeit oder Beschleunigung aufweist, zu der verbleibenden Objektoberfläche einen Mindestanteil der für die Sensormittel sichtbaren Objektoberfläche ausmachen. Denkbar ist, die Bereichsgröße auf größer 5 %, insbesondere größer 10 % festzulegen.

In einer bevorzugten Ausgestaltung umfassen die Sensormittel einen einzigen Überwachungssensor, z.B. eine 3D-Kamera. Zur Bestimmung eines 3D-Bildes können unterschiedliche Technologien zum Einsatz kommen. Beispielsweise wird ein dreidimensionales Bild eines Objektes durch Triangulation auf der Grundlage von zwei Stereo-Einzelkameras ermittelt. Außerdem können Radarsensoren oder Sensoren, die auf Interferometrie basieren zum Einsatz kommen. Ebenfalls denkbar ist der Einsatz eines Sensors, der aus der Laufzeit oder Phasenverschiebung eines Signals einen Abstand zu einem Punkt ermittelt. Beispielsweise kann ein Sensor zur Anwendung kommen, bei welchem auf eine elektromagnetische Welle bestimmter Frequenz ein Signal aufmoduliert wird, wobei aus der Phasendifferenz des ausgesendeten modulierten Signals zu dem von einem Objekt zurückreflektierten Signal ein Abstand zum Objekt ermittelbar ist. Diese Technologie kann auch in einer Matrixkamera zur Anwendung kommen, so dass ein "Distanzbild" eines Objekts erzeugt werden kann.

In einer außerdem günstigen Ausgestaltung der Erfindung wird ein Lichtvorhang mit mehreren Sendern und Empfängern eingesetzt, der sich in Bewegungsrichtung erstreckt. Dadurch lässt sich eine Beschleunigung eines Objekts erfassen.

Um zu vermeiden, dass beispielsweise Personen unbeobachtet dennoch in einen Gefahrenbereich gelangen können, weil sie von einem ebenfalls herannahenden Gegenstand verdeckt werden, können Überwachungssensoren, z.B. mehrere 3D-Kameras zum Einsatz kommen.

Beispielsweise werden zwei 3D-Kameras so angeordnet, dass sie einen sich überschneidenden Beobachtungsbereich aufweisen. Vorzugsweise sind die 3D-Kameras dabei in Bezug auf einen zu überwachenden Bereich gegenüberliegend angeordnet. Damit können z.B. die Vorderseite und die Rückseite, aber auch die Seitenbereiche eines Gegenstands so erfasst werden, dass eine unbefugt herannahende Person von diesem Gegenstand nicht derart abgeschattet wird, dass deren Erfassung nicht mehr möglich ist. Ebenfalls denkbar ist das Betreiben zu unterschiedlichen Zeiten. Insbesondere sind die Überwachungssensoren, z.B. Kameras aufeinander derart synchronisiert, dass jede Kamera in einem vorbestimmten "Zeitfenster" aktiv ist. Dadurch lassen sich gegenseitige Störungen der Sensoren vermeiden. Eine gegenseitige Beeinflussung kann auch dadurch umgangen werden, dass die Sensoren mit unterschiedlichen Frequenzen arbeiten. Bei einem 3D-Sensor, der eine Phasenverschiebung, von moduliertem Licht auswertet, können sich unterschiedliche Frequenzen auf eine Trägerfrequenz oder eine Modulationsfrequenz beziehen.

Um zu verhindern, dass eine Person, die sich sehr langsam bewegt, in den Gefahrenbereich gelangt, wird vorzugsweise die Detektion einer langsamen Bewegung einer Personendetektion zugeordnet.

In einer überdies bevorzugten Ausgestaltung der Erfindung sind Korrekturmittel vorgesehen, um Geschwindigkeitsunterschiede und/oder Beschleunigungsunterschiede von Punkten in einer Ebene an einer Objektoberfläche, die sich in einer normalerweise auftretenden bevorzugten Richtung zu den Sensormitteln bewegt, zumindest annähernd ausgleichen zu können. Dieser Vorgehensweise liegt der Sachverhalt zugrunde, dass eine Ebene, die sich auf eine Kamera zu bewegt, an nicht allen Stellen die gleiche Geschwindigkeit bzw. Beschleunigung aufweist. Ein Punkt der auf der optischen Achse des Kamerasystems liegt, bewegt sich schneller auf die Kamera zu als ein Punkt, der eine Distanz zur optischen Achse aufweist. Vorzugsweise wird diese Abhängigkeit kompensiert. Dazu kann ein Lernmodus zur Anwendung kommen, um die Transportrichtung und die Geschwindigkeit eines Förderers festzustellen. Die Transportrichtung kann zur Definition eines kartesischen Koordinatensystems dienen, welches exakt in der Transportrichtung liegt. Alle aufgenommenen Bilder können dann in dieses Koordinatensystem transformiert werden, was die Berechnung der Geschwindigkeit bzw. der Beschleunigung von Objektoberflächen vereinfacht, wenn sich das System im regulären Beobachtungsmodus befindet. Auf diese Weise lässt sich auch die Detektion einer Beschleunigung von Punkten an einem sich eigentlich konstant bewegenden Objekt, für solche Punkte, die einen Abstand senkrecht zur optischen Achse der Sensormittel aufweisen und daher eine andere Beschleunigung besitzen als die in der optischen Achse, ausgleichen.

Die Sensoranordnung ist derart ausgelegt, Bereiche mit unterschiedlicher Geschwindigkeit und/oder Beschleunigung an einer Objektoberfläche in Bezug auf bekannte Geschwindigkeitsmuster bzw. Beschleunigungsmuster qualifizieren zu können. Damit ist es grundsätzlich möglich z.B. Menschen von Hunden zu unterscheiden, die gegebenenfalls einen Bereich im Gegensatz zu Menschen nicht betreten dürfen.

Um z.B. eine auf einer Palette still sitzende Person, die sich über eine Förderereinrichtung einem Gefahrenbereich annähert, erkennen zu können, ist es vorteilhaft, wenn die Sensoranordnung in der Lage ist, Objekte, z.B. anhand von Konturen, beispielsweise durch gekrümmte Linien zu erkennen. Dies ist allerdings in diesem Fall nur dann zielführend, wenn sonst sich annähernde Gegenstände keine gekrümmten Linien aufweisen.

Im Zusammenhang mit einem Förderer ist es überdies bevorzugt, wenn sich der Förderer ungleichmäßig bewegt. Dadurch wird eine auf dem Förderer sonst still stehende Person gezwungen, Ausgleichsbewegungen durchzuführen, wodurch wieder Oberflächenmuster mit unterschiedlichen Geschwindigkeiten entstehen, die sich erfindungsgemäß Tieren oder einer Person zuordnen lassen.

In einer überdies bevorzugten Ausgestaltung der Erfindung ist die Sensoranordnung in der Lage, mit Hilfe von einer oder mehreren Lernfahrten Geschwindigkeitsmuster und/oder Beschleunigungsmuster zu erfassen. Auf diese Muster kann die Sensoranordnung zurückgreifen, um einen Vergleich mit einem aktuellen Geschwindigkeits- bzw. Beschleunigungsmuster vorzunehmen. Damit kann beispielsweise eine Person von einem Tier auseinandergehalten werden.

Denn ein Tier liefert erfahrungsgemäß ein anderes Muster als eine Person.

Im Weiteren ist es bevorzugt, dass die Sensoranordnung in der Lage ist, ein oder mehrere vorgebbare Teilbereiche des Erfassungsbereichs für eine Signalausgabe auszublenden. Beispielsweise werden in Abhängigkeit einer Geschwindigkeit oder einer Beschleunigung eines Objekts nur bestimmte "Volumenbereiche" im dreidimensional erfassten Raum betrachtet.

In einer überdies bevorzugten Ausgestaltung der Erfindung ist die Signalausgabe davon abhängig, welche Position, welcher Abstand zur Kamera, welche Bewegungsrichtung, welche Geschwindigkeit und/oder welche Beschleunigung Objekte aufweisen. Zum Beispiel kann bei einem großen Abstand eines Objekts oder bei einem kleinen Abstand des Objekts und einer vergleichsweise kleinen Geschwindigkeit des Objekts auf eine Signalausgabe verzichtet werden.

Eine erfindungsgemäße Sensorvorrichtung kann nicht nur im Zusammenhang mit einem Fördersystem zu einem Gefahrenbereich zur Anwendung kommen. Denkbar ist auch damit den Zugang zu einer Tür oder einem Tor zu kontrollieren, dahingehend, dass nur Objekte mit einem vorgegebenen Beschleunigungs- und/oder Geschwindigkeitsmuster einen Zugang zu einem bestimmten Raum bekommen bzw. überhaupt das Herannahen oder Passieren einer Person festgestellt wird. Dadurch kann eine Türbewegung, in einer Weise kontrolliert werden, dass die Tür nicht schließt, wenn die Sensorvorrichtung Personen im Schließbereich der Tür feststellt.

### Zeichnungen

Mehrere Ausführungsbeispiele der Erfindung sind in den Zeichnungen dargestellt und werden nachstehend unter Angabe weiterer Vorteile und Einzelheiten näher erläutert. Es zeigen
- Figur 1: eine Roboterzelle mit Fördereinrichtung zum Heranführen von Gegenständen in einer schematischen Draufsicht,
- Figur 2: eine zu Figur 1 entsprechende Roboterzelle mit Fördereinrichtung, bei welcher sich eine Person auf die Roboterzelle anstelle eines Gegenstands zubewegt,
- Figur 3: eine Roboterzelle mit Fördereinrichtung in einer schematischen Draufsicht, die anstatt von einer mit zwei Kameras überwacht wird,
- Figur 4 und 5: die Ausführungsform nach Figur 3 in unterschiedlichen Betriebszuständen ebenfalls jeweils in Draufsicht und
- Figur 6: eine weitere Ausführungsform einer Roboterzelle mit Fördereinrichtung und zwei Überwachungskameras in einer schematischen Seitenansicht.

### Beschreibung der Ausführungsbeispiele

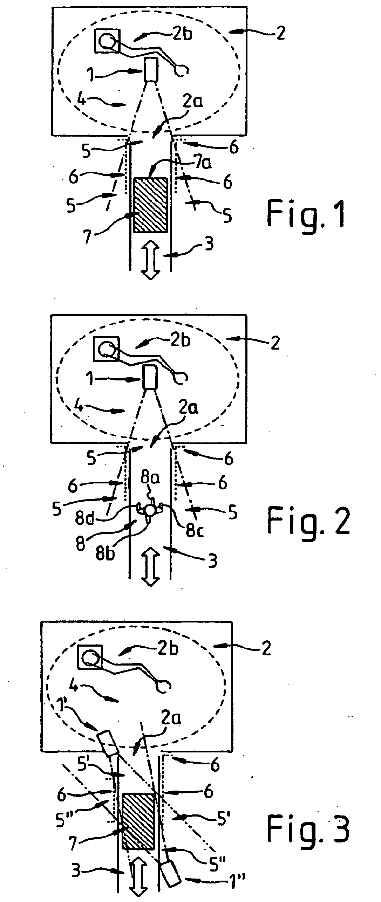

Figur 1 zeigt eine Roboterzelle 2, vor welcher ein Förderband 3 zu deren Versorgung mit Gegenständen 7 angeordnet ist. Die Roboterzelle 2 besitzt einen Zugang 2a, der nicht von Personen passiert werden darf, solange ein Roboter 2b aktiv ist.

In Figur 1 ist die Situation dargestellt, wo ein Gegenstand 7 auf dem Förderband 3 in einen Gefahrenbereich des Roboters 2b über den Zugang 2a transportiert wird. Eine 3D-Kamera 1 bestimmt die Geschwindigkeit des Gegenstands 7. Die 3D-Kamera 1 umfasst beispielsweise einen optischen Sensor, bei welchem der Abstand zu einem Objekt optisch ermittelt wird, nach der Methode "Time Of Flight" oder abgekürzt "TOF". Dabei wird Licht aus einer Lichtquelle ausgesandt, auf welches eine Schwingung moduliert ist. Außerdem ist ein Sensor vorgesehen, mit dem das modulierte Licht erfassbar ist, wenn es von einer entsprechenden Oberfläche zurückreflektiert wird. Aus der Phasendifferenz der aufmodulierten Schwingung zwischen dem ausgesandten und dem empfangenen reflektierten Licht lässt sich der Abstand zum Objekt, an welchem das Licht zurückreflektiert wurde, bestimmen. Um eine eindeutige Auswertung zu ermöglichen, sollte die Wellenlänge der auf das Licht aufmodulierten Schwingung größer sein als der zweifache Abstand zu dem Objekt, an welcher das Licht zurückreflektiert wird. Vorzugsweise wird ein Sensor mit vielen Bildpunkten, insbesondere ein Matrixsensor eingesetzt, der damit eine "Distanzbildkarte" vom Gegenstand 7 erzeugen kann. Werden mehrere nacheinander aufgenommene Distanzbilder miteinander verglichen und durch die Zeit dividiert, kann die Geschwindigkeit des herannahenden Gegenstands 7 bestimmt werden, mit einer Auflösung, die es erlaubt, Geschwindigkeitsunterschiede innerhalb der Oberfläche des Gegenstands 7 zu erkennen.

Da jedoch der Gegenstand 7 eine Geschwindigkeitsverteilung seiner Oberfläche 7a, die von der 3D-Kamera 1 erfasst wird, aufweist, die entsprechend eines festen Gegenstands im Wesentlichen homogen ist, wird dem Gegenstand 7 erlaubt, in den Gefahrenbereich 4 hineinzufahren. Dabei setzt der Roboter 2b in der Roboterzelle 2 seine Arbeit fort.

Vor dem Zugang 2a sind mechanische Sicherheitsvorrichtungen 6 vorgesehen, mit welchen verhindert wird, dass Personen den Gefahrenbereich 4 betreten, ohne dass die Kamera 1 die Möglichkeit hat, diese wahrzunehmen.

Figur 2 zeigt eine Situation, wo eine Person 8 versucht, den Gefahrenbereich 4 zu betreten. Die 3D-Kamera 1 detektiert in Bezug auf den Rumpf unterschiedliche Geschwindigkeiten von Beinen 8a, 8b sowie Armen 8c, 8d, wenn die Person 8 heranmarschiert.

Aufgrund der inhomogenen Geschwindigkeitsverteilung wird durch eine entsprechende Steuerung (nicht dargestellt) der Roboter 2b veranlasst, gefährliche Aktionen einzustellen.

Das Blickfeld der jeweiligen Einzelkameras 1 in den Figuren 1 und 2 ist mit dem Bezugszeichen 5 versehen.

Wenn es möglich ist, dass eine Person 8 sich hinter oder vor dem Gegenstand 7 verstecken kann und auf diese Weise ein Zutritt zum Gefahrenbereich 4 möglich wird, sind zwei Kameras 1', 1" bevorzugt. Die beiden Kameras 1', 1" sind vorteilhafterweise derart installiert, dass die komplette Oberfläche 7a des Gegenstands 7 überwacht werden kann. Damit wird jede verdeckte Person 8, die sich an der Seite des Gegenstands 7 bewegt, detektiert.

Figur 3 zeigt eine Situation, in welcher lediglich ein Gegenstand 7 in den Gefahrenbereich 4 ohne eine Person eintritt. Der Gegenstand 7 wird nicht darin gehindert bei laufendem Roboter in den Gefahrenbereich 4 hineinzufahren.

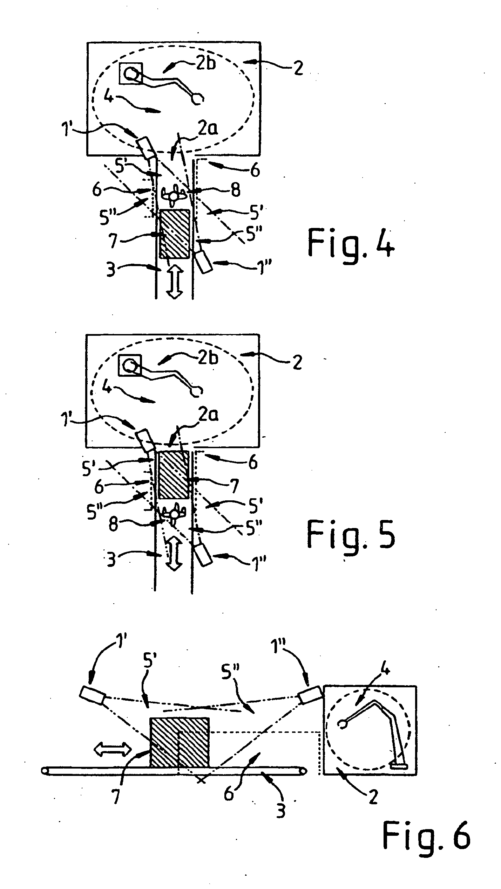

In Figuren 4 und 5 ist hingegen eine Situation dargestellt, wo sich eine Person 8 vor bzw. hinter dem Gegenstand 7 befindet und auf diesem Weg den Gefahrenbereich 4 betreten möchte. Zumindest jeweils eine Kamera 1', 1" ist jedoch in der Lage, die Person 8 zu sehen und entsprechend zu identifizieren, so dass vor dem Betretender Person entsprechende Maßnahmen in der Roboterzelle 2 eingeleitet werden können.

Figur 6 zeigt eine Ausführungsform in einer Seitenansicht, die in Draufsicht so wie die Ausführungsformen gemäß Figur 3 bis 5 aussehen kann, bei welcher sich die beiden Kameras 1', 1" nicht sehen können. Überwachungsfelder 5', 5", die auch in den Figuren 3, 4 und 5 angedeutet sind, überschneiden sich zwar, jedoch enthalten die Überwachungsfelder nicht jeweils die andere Kamera 1', 1".

Das hat den Vorteil, dass sich gegenüberliegende Kameras 1', 1" bei ihrer Detektion nicht gegenseitig stören, weil beispielsweise eine Beeinflussung der jeweiligen Beleuchtung der Kamera auftritt. Damit wird eine ausreichende Detektionssicherheit für die jeweilige Kamera sichergestellt.

Da zur Detektion von Personen nicht deren Form oder Kontur, wie in bekannten Ausführungsformen, ermittelt wird, sondern deren Detektion auf der Analyse einer Geschwindigkeitsverteilung erfolgt, die mit Hilfe einer 3D-Kamera vergleichsweise einfach zu ermitteln ist, ergibt sich dementsprechend ein vergleichsweise einfaches und sicheres System. Das rührt auch daher, dass bei der Bestimmung einer Geschwindigkeitsverteilung Kleidung, Hüte oder Gepäck, das die Person trägt, bzw. mit sich führt, eine Detektion nicht beeinflusst.

Durch den Einsatz von zwei Kameras werden "Sichtschatten" vermieden, so dass ein durch einen Gegenstand verdecktes Eintreten einer Person in den Gefahrenbereich des Roboters oder einer Maschine zuverlässig vermieden werden kann.

### Bezugszeichenliste

- 1: 3D-Kamera
- 1': 3D-Kamera
- 1": 3D-Kamera
- 2: Roboterzelle
- 2a: Zugang
- 2b: Roboter
- 3: Förderband
- 4: Gefahrenbereich
- 5: Blickfeld der Kamera
- 5': Blickfeld der Kamera
- 5": Blickfeld der Kamera
- 6: Sicherheitseinrichtung
- 7: Gegenstand
- 7a: Oberfläche
- 8: Person
- 8a: Beine
- 8b: Beine
- 8c: Arme
- 8d: Arme

## Patentansprüche

1. Sensorvorrichtung mit einer Sensoranordnung (1, 1', 1") zur Detektion von sich bewegenden Objekten (7, 8), die Sensormittel und eine Elektronikeinheit umfasst, **dadurch gekennzeichnet, dass** die Sensoranordnung (1, 1', 1") derart ausgestaltet ist, dass mittels der Sensoranordnung (1,1',1") das sich bewegende Objekt (7, 8) erfasst und daraufhin untersucht wird, ob die Oberfläche (7a) des sich bewegenden Objekts (7, 8) Bereiche aufweist, die sich mit unterschiedlicher Geschwindigkeit und/oder Beschleunigung bewegen, dass die Sensoranordnung (1, 1', 1") zur Ausgabe eines Signals bei der Erfassung von verschiedenen Geschwindigkeiten und/oder Beschleunigungen für unterschiedliche Bereiche innerhalb einer Oberfläche (7a) eines Objekts (7, 8) ausgebildet ist, wenn sich die Geschwindigkeiten und/oder Beschleunigungen um ein vordefiniertes Maß unterscheiden, dass die Sensoranordnung (1, 1', 1") dazu ausgebildet ist, ein Bild des Objekts (7, 8) mit Distanzen zur Objektoberfläche (7a) zu ermitteln, dass die Sensoranordnung (1, 1', 1") zum Auffinden der Bereiche der Objektoberfläche (7a) mit unterschiedlichen Geschwindigkeiten oder Beschleunigungen vom Sensor aufgenommene Distanzbilder miteinander vergleicht, dass die Sensoranordnung (1, 1', 1") aus dem Vergleich von Distanzbildern Distanzdifferenzen und durch in Bezug setzen zu einem Zeitmaßstab ein Geschwindigkeitsbild und/oder Beschleunigungsbild des Objekts (7, 8) ermittelt, und dass die Sensoranordnung (1, 1', 1") derart ausgelegt ist, Bereiche mit unterschiedlicher Geschwindigkeit und/oder Beschleunigung an einer Objektoberfläche (7a) in Bezug auf bekannte Geschwindigkeitsmuster bzw. Beschleunigungsmuster qualifizieren zu können.

2. Sensorvorrichtung mit einer Sensoranordnung (1, 1', 1") nach Anspruch 1, **dadurch gekennzeichnet, dass** die Sensoranordnung (1, 1', 1") dazu ausgelegt ist, ein Objekt (7, 8) zu erfassen und daraufhin zu untersuchen, ob sich das Objekt beschleunigt.

3. Vorrichtung nach einem der vorhergehenden Ansprüche, **dadurch gekennzeichnet, dass** die Sensormittel mehrere Überwachungssensoren (1, 1', 1") umfassen.

4. Vorrichtung nach einem der vorhergehenden Ansprüche, **dadurch gekennzeichnet, dass** mehrere Überwachungssensoren so angeordnet sind, dass sie einen sich überschneidenden Beobachtungsbereich (5', 5") aufweisen.

5. Vorrichtung nach einem der vorhergehenden Ansprüche, **dadurch gekennzeichnet, dass** mehrere Überwachungssensoren derart positioniert sind, dass sich die Sensoren (1', 1") nicht gegenseitig sehen können.

6. Vorrichtung nach einem der vorhergehenden Ansprüche, **dadurch gekennzeichnet, dass** Überwachungssensoren (1', 1") in Bezug auf einen zu überwachenden Bereich gegenüberliegend angeordnet sind.

7. Vorrichtung nach einem der vorhergehenden Ansprüche, **dadurch gekennzeichnet, dass** Korrekturmittel vorgesehen sind, um Geschwindigkeitsunterschiede und/oder Beschleunigungsunterschiede von Punkten an einer bekannten Oberflächenform, insbesondere in einer Ebene an einer Objektoberfläche (7a), die sich in einer üblichen Bewegungsrichtung zu den Sensormitteln bewegt, zumindest annähernd ausgleichen zu können.

8. Vorrichtung nach einem der vorhergehenden Ansprüche, **dadurch gekennzeichnet, dass** die Sensoranordnung (1, 1', 1") in der Lage ist, mittels einer oder mehrerer Lernfahrten Geschwindigkeitsmuster und/oder Beschleunigungsmuster zu erfassen.

9. Vorrichtung nach einem der vorhergehenden Ansprüche, **dadurch gekennzeichnet, dass** die Art der Signalausgabe abhängig ist von der Position, einem Abstand zu einer Kamera, der Bewegungsrichtung, der Geschwindigkeit und/oder der Beschleunigung von Objekten (7, 8).

10. Anlage mit einer Fördereinrichtung zum Transportieren eines Objekts (7, 8) und einer Sensorvorrichtung nach einem der vorhergehenden Ansprüche.

11. Anlage nach Anspruch 10, **dadurch gekennzeichnet, dass** die Fördereinrichtung eine ungleichmäßige Bewegung des Objekts (7, 8) veranlasst.

## Claims

1. Sensor device having a sensor arrangement (1, 1', 1") for detecting moving objects (7, 8), that comprises sensor means and an electronic unit, **characterized in that** the sensor arrangement (1, 1', 1") is designed in such a way that the moving object (7, 8) is detected by means of the sensor arrangement (1, 1', 1") and it is subsequently investigated whether the surface (7a) of the moving object (7, 8) has regions that move at a different speed and/or acceleration, **in that** the sensor arrangement (1, 1', 1") is designed to output a signal in the event of the detection of various speeds and/or accelerations for different regions within a surface (7a) of an object (7, 8) when the speeds and/or accelerations differ by a predetermined measure, **in that** the sensor arrangement (1, 1', 1") is designed to determine an image of the object (7, 8) with distances from the object surface (7a), **in that** the sensor arrangement (1, 1', 1") intercompares distance images recorded by the sensor in order to find the regions of the object surface (7a) having different speeds or accelerations, **in that** the sensor arrangement (1, 1', 1") determines distance differences from the comparison of distance images, and determines a speed image and/or acceleration image of the object (7, 8) by reference to a time scale, and **in that** the sensor arrangement (1, 1', 1") is designed to be able to qualify regions having different speed and/or acceleration on an object surface (7a) with reference to known speed patterns and acceleration patterns, respectively.

2. Sensor device having a sensor arrangement (1, 1', 1") according to Claim 1, **characterized in that** the sensor arrangement (1, 1', 1") is designed to detect an object (7, 8) and to subsequently investigate whether the object is accelerating.

3. Device according to one of the preceding claims, **characterized in that** the sensor means comprise a plurality of monitoring sensors (1, 1', 1").

4. Device according to one of the preceding claims, **characterized in that** a plurality of monitoring sensors are arranged such that they have an overlapping observation region (5', 5").

5. Device according to one of the preceding claims, **characterized in that** a plurality of monitoring sensors are positioned in such a way that the sensors (1', 1") are not mutually visible.

6. Device according to one of the preceding claims, **characterized in that** monitoring sensors (1', 1") are arranged opposite with reference to a region to be monitored.

7. Device according to one of the preceding claims, **characterized in that** correction means are provided in order to be able at least approximately to compensate speed differences and/or acceleration differences of points on a known surface form, in particular in a plane at an object surface (7a) that moves in a customary movement direction relative to the sensor means.

8. Device according to one of the preceding claims, **characterized in that** the sensor arrangement (1, 1', 1") is capable of detecting speed patterns and/or acceleration patterns by means of one or more learning runs.

9. Device according to one of the preceding claims, **characterized in that** the type of signal output is dependent on the position, the distance from a camera, the movement direction, the speed and/or the acceleration of objects (7, 8).

10. System having a conveying device for transporting an object (7, 8) and a sensor device according to one of the preceding claims.

11. System according to Claim 10, **characterized in that** the conveying device causes a nonuniform movement of the object (7, 8).

## Revendications

1. Dispositif de détection comprenant un arrangement de capteurs (1, 1', 1") pour détecter des objets (7, 8) en mouvement, lequel comprend des moyens de détection et une unité électronique, **caractérisé en ce que** l'arrangement de capteurs (1, 1', 1") est configuré de telle sorte que l'objet (7, 8) en mouvement est détecté au moyen de l'arrangement de capteurs (1, 1', 1") et ensuite analysé pour vérifier si la surface (7a) de l'objet (7, 8) en mouvement présente des zones qui se déplacent avec des vitesses et/ou des accélérations différentes,
**en ce que** l'arrangement de capteurs (1, 1', 1") est configuré pour délivrer un signal en cas de détection de vitesses et/ou d'accélérations différentes pour des zones différentes à l'intérieur d'une surface (7a) d'un objet (7, 8), lorsque les vitesses et/ou les accélérations diffèrent d'une valeur donnée,
**en ce que** l'arrangement de capteurs (1, 1', 1") est configuré pour déterminer une image de l'objet (7, 8) avec des distances par rapport à la surface d'objet (7a),
**en ce que** l'arrangement de capteurs (1, 1', 1"), pour retrouver les zones d'une surface d'objet (7a) ayant des vitesses ou des accélérations différentes, compare entre elles les images de distance enregistrées par le capteur,
**en ce que** l'arrangement de capteurs (1, 1', 1") détermine à partir de la comparaison des images de distance des différences de distance et, par référence à une échelle de temps, une image de vitesse et/ou une image d'accélération de l'objet (7, 8),
et **en ce que** l'arrangement de capteurs (1, 1', 1") est conçu de manière à pouvoir qualifier des zones ayant des vitesses et/ou des accélérations différentes sur une surface d'objet (7a) par rapport à des modèles de vitesse ou des modèles d'accélération connus.

2. Dispositif de détection comprenant un arrangement de capteurs (1, 1', 1") selon la revendication 1, **caractérisé en ce que** l'arrangement de capteurs (1, 1', 1") est conçu pour détecter un objet (7, 8) et l'analyser ensuite si l'objet accélère.

3. Dispositif selon l'une des revendications précédentes, **caractérisé en ce que** les moyens de détection comprennent plusieurs capteurs de surveillance (1, 1', 1").

4. Dispositif selon l'une des revendications précédentes, **caractérisé en ce que** plusieurs capteurs de surveillance sont disposés de telle sorte qu'ils présentent une plage d'observation (5', 5") se chevauchant.

5. Dispositif selon l'une des revendications précédentes, **caractérisé en ce que** plusieurs capteurs de surveillance sont positionnés de telle sorte que les capteurs (1', 1") ne peuvent pas se voir mutuellement.

6. Dispositif selon l'une des revendications précédentes, **caractérisé en ce que** les capteurs de surveillance (1', 1") sont disposés opposés l'un à l'autre par rapport à une zone à surveiller.

7. Dispositif selon l'une des revendications précédentes, **caractérisé en ce que** des moyens de correction sont prévus afin de pouvoir compenser au moins approximativement les différences de vitesse et/ou les différences d'accélération de points sur une forme de surface connue, notamment dans un plan sur une surface d'objet (7a), qui se déplace dans un sens de déplacement habituel par rapport aux moyens de détection.

8. Dispositif selon l'une des revendications précédentes, **caractérisé en ce que** l'arrangement de capteurs (1, 1', 1") est en mesure d'acquérir des modèles de vitesse et/ou des modèles d'accélération au moyen d'une ou plusieurs courses d'apprentissage.

9. Dispositif selon l'une des revendications précédentes, **caractérisé en ce que** la nature de délivrance du signal dépend de la position, d'un écart par rapport à une caméra, du sens du déplacement, de la vitesse et/ou de l'accélération d'objets (7, 8).

10. Équipement muni d'un dispositif de convoyage pour transporter un objet (7, 8) et d'un dispositif de détection selon l'une des revendications précédentes.

11. Équipement selon la revendication 10, **caractérisé en ce que** le dispositif de convoyage produit un mouvement irrégulier de l'objet (7, 8).
